# EUROPÄISCHE PATENTSCHRIFT

(11) **EP 1 079 983 B1**
(45) Veröffentlichungstag und Bekanntmachung des Hinweises auf die Patenterteilung: **11.02.2004**
(21) Anmeldenummer: 00920573.3
(22) Anmeldetag: 24.03.2000
(51) Int. Cl.: B60J 10/12

(54) **EINKLEMMSCHUTZ FÜR EINE KRAFTBETÄTIGTE SCHLIESSEINRICHTUNG**
ANTI-JAMMING SYSTEM FOR A POWER-OPERATED LOCKING DEVICE
SYSTEME ANTI-BLOCAGE POUR DISPOSITIF DE FERMETURE MOTORISE

(30) Priorität: 26.03.1999 DE 19913879
(43) Veröffentlichungstag der Anmeldung: 07.03.2001
(73) Patentinhaber: Metzeler Automotive Profile Systems GmbH, 88131 Lindau/Bodensee (DE); Webasto Vehicle Systems International GmbH, 82131 Stockdorf (DE)
(72) Erfinder: THAL, Andreas, A-6850 Dornbirn (AT); HOFMANN, Knut, D-88239 Wangen (DE); HERTEL, Johann, D-82061 Neuried (DE)
(74) Vertreter: Preissner, Nicolaus, Dipl.-Ing.
(86) Internationale Anmeldenummer: PCT/EP2000/002634
(87) Internationale Veröffentlichungsnummer: WO 2000/058119

(56) Entgegenhaltungen:
- EP-A- 0 728 893
- EP-A- 0 870 892
- DE-U- 9 317 291

## Beschreibung

Die vorliegende Erfindung betrifft einen Einklemmschutz für eine kraftbetätigte Schließeinrichfung, insbesondere für ein Schiebedach eines Kraftfahrzeugs mit einem Hohlprofil aus einem elastomeren Material, das mindestens zwei zueinander beabstandete, elektrisch leitfähige Bereiche aufweist, deren Kontakt einen Schaltvorgang zum Ansteuern des Antriebsaggregats der Schließeinrichtung auslöst.

Ein derartiger Einklemmschutz ist aus der DE 197 20 713 C1 bekannt, die auf dieselbe Anmelderin zurückgeht. Bei dem bekannten Einklemmschutz sind an beiden Enden Formstücke vorgesehen, in denen die erforderlichen elektrischen Anschlüsse sowie ein Kontrollsystem aufgenommen sind. Das Kontrollsystem dient zur Funktionsprüfung des Einklemmschutzes und ist im allgemeinen als Abschlußwiderstand ausgebildet. Nachteilig bei dem bekannten Einklemmschutz ist, daß im Bereich der Formstücke keine Einklemmschutzfunktion gegeben ist. Ein umlaufender Einklemmschutz läßt sich daher nicht erreichen. Ein weiterer, gattungsgemäßer Einklemmschutz ist aus EP 0 728 893 A1 bekannt.

Aufgabe der vorliegenden Erfindung ist es daher, einen Einklemmschutz bereitzustellen, bei dem mit einfachen Mitteln ein umlaufender Einklemmschutz gewährleistet ist.

Erfindungsgemäß wird diese Aufgabe bei einem Einklemmschutz der eingangs genannten Art dadurch gelöst, daß das Hohlprofil an mindestens einem seiner Enden mit einem Ansatz versehen ist, der eine geringere Querschnittsdicke als das Hohlprofil aufweist.

Der erfindungsgemäße Einklemmschutz wird derart angeordnet, daß sich die Enden des Hohlprofils überlappen und der an dem einen Ende vorgesehene Ansatz auf dem Hohlprofil beabstandet zu dem anderen Ende aufliegt. Der Ansatz von geringerer Querschnittsdicke als das Hohlprofil ermöglicht ein Überlappen der beiden Enden. Im Überlappungsbereich sind die beiden Enden gegeneinander versetzt. Beim Einklemmen eines Gegenstandes im Überlappungsbereich werden das obenliegende Ende und/oder der Ansatz bewegt und verformen das darunterliegende Hohlprofil. Hierdurch wird der gewünschte Kontakt zum Ansteuern des Antriebaggregats der Schließeinrichtung ausgelöst. Die geringere Dicke der Verlängerung ermöglicht einen sanften Übergang zwischen dem oben liegenden.Ende und dem Hohlprofil.

Vorteilhafte Ausgestaltungen und Weiterbildungen der Erfindung gehen aus den Unteransprüchen hervor.

In vorteilhafter Ausgestaltung verjüngt sich der Ansatz ausgehend von dem zugeordneten Ende des Hohlprofils. Durch diese Verjüngung wird eine Anpassung an das Hohlprofil erreicht, auf dem der Ansatz bei der erfindungsgemäßen Anordnung aufliegt.

Gemäß einer vorteilhaften Weiterbildung verläuft die Oberseite des Ansatzes bündig mit der Oberseite des Hohlprofils. Hierdurch wird ein im wesentlichen vollständig glatter und optisch ansprechender Übergang erreicht.

Vorteilhaft ist der Ansatz mit dem zugeordneten Ende des Hohlprofils über eine Sollknickstelle verminderter Biegesteifigkeit verbunden. Die Sollknickstelle erlaubt die Verwendung eines Ansatzes mit vergleichsweise hoher Steifigkeit, die gegenüber dem zugeordneten Ende zum Verformen des Hohlprofils im Einklemmfall verschwenkt wird.

Gemäß einer vorteilhaften Weiterbildung ist der Ansatz an einer Stirnseite des Hohlprofils angeordnet. Dies ermöglicht ein Überlappen der Enden in einem gerade verlaufenden Bereich des Einklemmschutzes. Alternativ kann der Ansatz seitlich an dem Hohlprofil angeordnet werden, so daß ein Überlappen in einem Eckbereich realisiert werden kann.

Nach einer vorteilhaften Ausgestaltung weist der Ansatz an seinem von dem Hohlprofil abgewandten Ende eine Verdickung auf. Diese Verdickung vergrößert die Berührfläche zwischen dem Ende des Ansatzes und dem Hohlprofil und verhindert hierdurch Beschädigungen. Gleichzeitig wird die Dichtwirkung im Überlappungsbereich erhöht.

In vorteilhafter Weiterbildung ist der Ansatz im Querschnitt im wesentlichen gebogen ausgebildet. Hierdurch läßt sich eine Anpassung an die Oberfläche des Hohlprofils erreichen. Gleichzeitig wird die Steifigkeit des Ansatzes bei nur geringem Gewicht erhöht.

Vorteilhaft weist das mit dem Ansatz versehene Ende des Hohlprofils eine Verdickung auf. Diese Verdickung dient zum Abstützen auf dem darunter verlaufenden Bereich des Hohlprofils bei der erfindungsgemäßen Anordnung. Die Berührfläche wird vergrößert, wodurch Beschädigungen des Hohlprofils vermieden und die Dichtwirkung verbessert wird. Gleichzeitig wird eine definierte Anlagefläche bereitgestellt.

Gemäß einer vorteilhaften Ausgestaltung weist die Verdickung eine an die Oberseite des Hohlprofils angepaßte Anlagefläche auf. Die angepaßte Anlagefläche stellt eine definierte Berührfläche zwischen der Verdickung und dem Hohlprofil bereit.

Bei der erfindungsgemäßen Anordnung ist in vorteilhafter Weiterbildung vorgesehen, daß die Verdickung des mit dem Ansatz versehenen Endes des Hohlprofils mit ihrer Anlagefläche auf dem Hohlprofil beabstandet zu dem anderen Ende aufliegt. Hierdurch wird sichergestellt, daß das Hohlprofil eine umlaufende Einklemmschutzfunktion bereitstellt. Gleichzeitig kann ein Längenausgleich erfolgen, indem der Abstand zwischen den beiden Enden des Hohlprofils und damit der Überlappungsbereich in Abhängigkeit von den Randbedingungen passend vergrößert oder verkleinert wird. Alternativ oder zusätzlich kann das untere Ende des Hohlprofils in eine Ausnehmung eingeführt werden und hierdurch der gewünschte Längenausgleich erfolgen.

Vorteilhaft liegt der Ansatz mit seiner Verdickung auf dem Hohlprofil auf. Dies führt zu einer Vergrößerung der Berührfläche, so daß Beschädigungen des Hohlprofils vermieden und die Dichtwirkung erhöht wird.

In vorteilhafter Ausgestaltung wird im Mittelbereich des Ansatzes ein Zwischenraum zwischen dem Ansatz und dem Hohlprofil gebildet. Der Ansatz liegt dann nur mit seiner Verdickung auf dem Hohlprofil auf. Im Einklemmfall wird daher nur ein' kleiner Bereich des Hohlprofils verformt. Für die Verformung eines kleinen Bereichs sind nur geringe Kräfte erforderlich. Der erfindungsgemäße Einklemmschutz spricht daher in der erfindungsgemäßen Anordnung bereits bei kleinen Klemmkräften an, so daß Verletzungen durch ein Einklemmen zuverlässig ausgeschlossen sind.

Nachstehend wird die Erfindung an Hand eines Ausführungsbeispiels näher beschrieben, das schematisch in der Zeichnung dargestellt ist.
Dabei zeigt:
- Figur 1: eine schematische perspektivische Ansicht eines Dachausschnitts mit einer Dachöffnung;
- Figur 2: eine vergrößerte Darstellung der Einzelheit X aus Figur 1 im Schnitt;
- Figur 3: einen Schnitt längs der Linie III-III in Figur 2;
- Figur 4: einen Schnitt längs der Linie IV-IV in Figur 2; und
- Figur 5: einen Schnitt längs der Linie V-V in Figur 2.

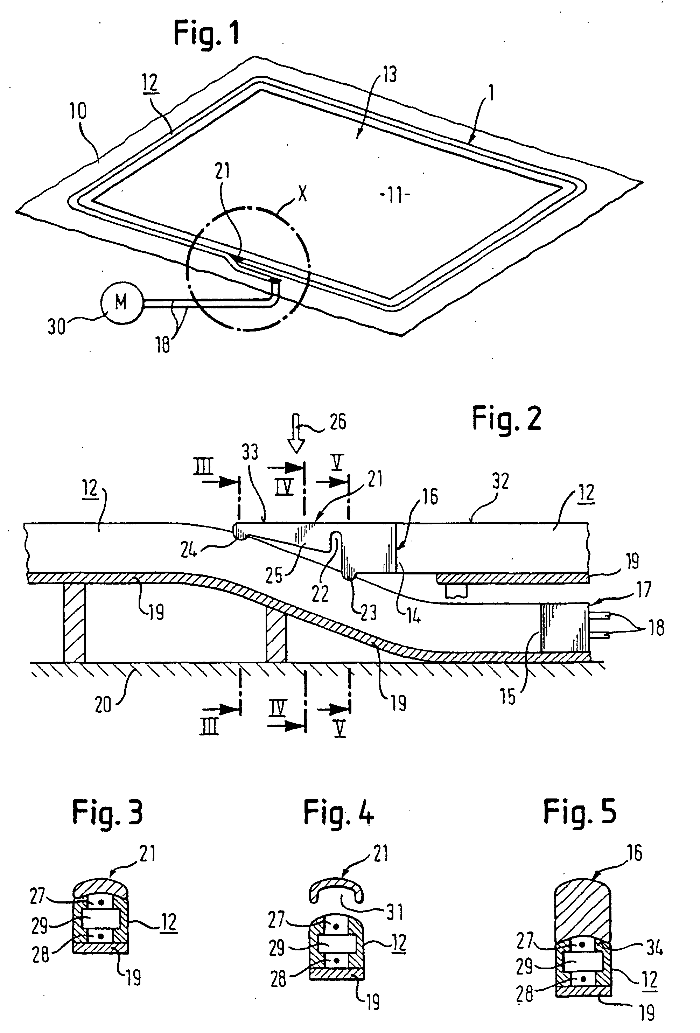

In Figur 1 ist schematisch ein Dachausschnitt 10 mit einer Dachöffnung 11 perspektivisch dargestellt. Die Dachöffnung 11 ist von einem umlaufenden Einklemmschutz 1 mit einem Hohlprofil 12 umgeben. Zum Verschließen der Dachöffnung 11 dient ein Schiebedach 13. Im Einklemmfall wird das Hohlprofil 12 verformt. Hierdurch wird ein Schaltvorgang ausgelöst, der über Anschlüsse 18 an das Antriebsaggregat 30 für das Schiebedach 13 weitergeleitet wird. In Abhängigkeit von den Voreinstellungen wird die Bewegung des Schiebedachs 13 angehalten oder reversiert. Die Enden 14, 15 des Hohlprofils 12 überlappen einander.

In Figur 2 ist der Überlappungsbereich des Hohlprofils 12 im Längsschnitt dargestellt. Die Figuren 3 bis 5 zeigen Querschnitte durch den Überlappungsbereich.

An beiden Enden 14, 15 des Hohlprofils 12 sind Formstücke 16, 17 angesetzt. In das Formstück 16 ist ein nicht näher dargestelltes Kontrollsystem integriert. Die Anschlüsse 18 sind in dem Formstück 17 aufgenommen. Das Hohlprofil 12 ist auf eine Auflage 19 aufgelegt, die sich auf einer Basis 20 abstützt.

Zum Bereitstellen eines umlaufenden Einklemmschutzes überlappen sich die Enden 14, 15 des Hohlprofils 12. An der Stirnseite des oberen Endes 14 ist ein Ansatz 21 vorgesehen, der eine geringere Querschnittsdicke als das Hohlprofil 12 aufweist. Der Ansatz 21 verjüngt sich ausgehend von dem Ende 14 des Hohlprofils 12. Hierdurch wird ein sanfter Übergang zwischen dem unteren Ende 15 und dem oberen Ende 14 des Hohlprofils 12 erreicht. Die Oberseite 33 des Ansatzes 21 verläuft hierbei bündig mit der Oberseite 32 des Hohlprofils 12, so daß eine im wesentlichen durchgehende Oberseite gebildet wird. Hierdurch wird ein ansprechender optischer Gesamteindruck erzielt.

Der Ansatz 21 ist mit dem Ende 14 des Hohlprofils 12 über eine Sollknickstelle 22 verminderter Biegesteifigkeit verbunden. Bei Auftreten einer Kraft in Pfeilrichtung 26 kann der Ansatz 21 somit gegenüber dem Ende 14 verschwenkt werden. Der Ansatz 21 liegt hierbei mit einer Verdickung 24 an seinem von dem Hohlprofil 12 abgewandten Ende auf. Im Mittelbereich 25 des Ansatzes 21 wird ein Zwischenraum 31 zwischen dem Ansatz 21 und dem Hohlprofil 12 gebildet. Der Ansatz 12 berührt somit das Hohlprofil 12 nur mit der Verdickung 24. Hierdurch wird eine kleine Berührfläche erreicht, die bereits bei kleinen, in Pfeilrichtung 26 auftretenden Kräften die Einklemmschutzfunktion auslöst.

Das obere Ende 14 des Hohlprofils 12, an dem der Ansatz 21 angeordnet ist, weist eine Verdickung 23 auf. Diese Verdickung 23 liegt mit einer Anlagefläche 34 beabstandet zu dem anderen Ende 1 5 auf dem Hohlprofil auf. Die Anlagefläche 34 ist hierbei an die Oberseite 32 des Hohlprofils 12 angepaßt, so daß Beschädigungen vermieden und ein rasches Anlösen erreicht werden.

Bei einem Einklemmfall außerhalb des Überlappungsbereiches wird das Hohlprofil 12 verformt, so daß die über einen Zwischenraum 29 beabstandeten elektrisch leitfähigen Bereiche 27, 28 miteinander in Kontakt kommen. Hierdurch wird der Schaltvorgang zum Ansteuern des Antriebsaggregats 30 für das Schiebedach 13 ausgelöst. Im Überlappungsbereich wird der Ansatz 21 gegenüber dem oberen Ende 14 des Hohlprofils 12 verschwenkt. Die Verdickung 24 verformt daher das Hohlprofil 12. Erneut werden die beiden Bereiche 27, 28 miteinander in Kontakt gebracht und der Schaltvorgang ausgelöst. Bei einem Einklemmen im Bereich des Formstücks 16 verformt dieses mit seiner Verdickung 23 das darunterliegende Hohlprofil 12. Es wird erneut der gewünschte Schaltvorgang zum Ansteuern des Antriebsaggregats 30 ausgelöst.

Der erfindungsgemäße Einklemmschutz 1 ermöglicht auf Grund des Ansatzes 21 mit geringerer Dicke ein Überlappen der Enden 14, 15 des Hohlprofils 12. Hierdurch wird ein umlaufender Einklemmschutz 1 bereitgestellt.

## Patentansprüche

1. Einklemmschutz für eine kraftbetätigte Schließeinrichtung (13), insbesondere für ein Schiebedach eines Kraftfahrzeugs, mit einem Hohlprofil (12) aus einem elastomeren Material, das mindestens zwei zueinander beabstandete, elektrisch leitfähige Bereiche (27, 28) aufweist, deren Kontakt einen Schaltvorgang zum Ansteuern des Antriebsaggregats (30) der Schließeinrichtung (13) auslöst, **dadurch gekennzeichnet, daß** das Hohlprofil (12) an mindestens einem seiner Enden (14; 15) mit einem Ansatz (21) versehen ist, der eine geringere Querschnittsdicke als das Hohlprofil (1 2) aufweist.

2. Einklemmschutz nach Anspruch 1, **dadurch gekennzeichnet, daß** sich der Ansatz (21) ausgehend von dem zugeordneten Ende (14) des Hohlprofils (12) verjüngt.

3. Einklemmschutz nach Anspruch 1 oder 2, **dadurch gekennzeichnet, daß** die Oberseite (33) des Ansatzes (21) bündig mit der Oberseite (32) des Hohlprofils (12) verläuft.

4. Einklemmschutz nach einem der Ansprüche 1 bis 3, **dadurch gekennzeichnet, daß** der Ansatz (21) mit dem zugeordneten Ende (14) des Hohlprofils (12) über eine Sollknickstelle (22) verminderter Biegesteifigkeit verbunden ist.

5. Einklemmschutz nach einer der Ansprüche 1 bis 4, **dadurch gekennzeichnet, daß** der Ansatz (21) an einer Stirnseite des Hohlprofils (12) angeordnet ist.

6. Einklemmschutz nach einem der Ansprüche 1 bis 5, **dadurch gekennzeichnet, daß** der Ansatz (21) an seinem von dem Hohlprofil (12) abgewandten Ende eine Verdickung (24) aufweist.

7. Einklemmschutz nach einem der Ansprüche 1 bis 6, **dadurch gekennzeichnet, daß** der Ansatz (21) im Querschnitt im wesentlichen gebogen ausgebildet ist.

8. Einklemmschutz nach einem der Ansprüche 1 bis 7, **dadurch gekennzeichnet, daß** das mit dem Ansatz (21) versehene Ende (14) des Hohlprofils (12) eine Verdickung (23) aufweist.

9. Einklemmschutz nach Anspruch 8, **dadurch gekennzeichnet, daß** die Verdickung (23) eine an die Oberseite (32) des Hohlprofils (12) angepaßte Anlagefläche (34) aufweist.

10. Anordnung eines Einklemmschutzes (1) nach einem der vorhergehenden Ansprüche, **dadurch gekennzeichnet, daß** sich die Enden (14, 15) des Hohlprofils (12) überlappen und der an dem einen Ende (14) vorgesehene Ansatz (21) auf dem Hohlprofil (12) beabstandet zu dem anderen Ende (15) aufliegt.

11. Anordnung nach Anspruch 10, **dadurch gekennzeichnet, daß** die Verdickung (23) des mit dem Ansatz (21) versehenen Endes (14) des Hohlprofils (12) mit ihrer Anlagefläche (27) auf dem Hohlprofil (12) beabstandet zu dem anderen Ende (15) aufliegt.

12. Anordnung nach Anspruch 10 oder 11, **dadurch gekennzeichnet, daß** der Ansatz (21) mit seiner Verdickung (24) auf dem Hohlprofil (12) aufliegt.

13. Anordnung nach einem der Ansprüche 10 bis 12, **dadurch gekennzeichnet, daß** im Mittelbereich (25) des Ansatzes (21) ein Zwischenraum (31) zwischen dem Ansatz (21) und dem Hohlprofil (12) gebildet wird.

## Claims

1. A trapping protector for a power-operated closing device (13), more particularly for a motor vehicle sunroof, including an elastomer hollow profile (12) comprising at least two electrical conductive portions (27, 28) spaced away from each other whose contact triggers a switching action of a drive assembly (30) of the closing device (13), **characterized in that** said hollow profile (12) is provided at least one of its ends (14; 15) with an appendage (21) of less cross-sectional thickness than said hollow profile (12).

2. The trapping protector as set forth in claim 1, **characterized in that** said appendage (21) is tapered as of the assigned end (14) of said hollow profile (12).

3. The trapping protector as set forth in claim 1 or 2, **characterized in that** the upper side (33) of said appendage (21) is flush with the upper side (32) of said hollow profile (12).

4. The trapping protector as set forth in any of the claims 1 to 3, **characterized in that** said appendage (21) is connected to the assigned end (14) of said hollow profile (12) via a design kink location (22) of reduced flexibility.

5. The trapping protector as set forth in any of the claims 1 to 4, **characterized in that** said appendage (21) is arranged on one face of said hollow profile (12).

6. The trapping protector as set forth in any of the claims 1 to 5, **characterized in that** said appendage (21) comprises at its end facing away from said hollow profile (12) a thickened portion (24).

7. The trapping protector as set forth in any of the claims 1 to 6, **characterized in that** said appendage (21) is configured cross-sectionally substantially curved.

8. The trapping protector as set forth in any of the claims 1 to 7, **characterized in that** the end (14) of said hollow profile (12) provided with said appendage (21) comprises a thickened portion (23).

9. The trapping protector as set forth in claim 8, **characterized in that** said thickened portion (23) comprises a contact surface area (34) adapted to the upper side (32) of said hollow profile (12).

10. An arrangement of a trapping protector (1) as set forth in any of the preceding claims, **characterized in that** said ends (14; 15) of said hollow profile (12) overlap and said appendage (21) provided at the one end (14) rests on said hollow profile (12) spaced away from the other end (15).

11. The arrangement as set forth in claim 10, **characterized in that** said thickened portion (23) of said end (14) of said hollow profile (12) provided with said appendage (21) rests by its contact surface area (27) on said hollow profile (12) spaced away from said other end (15).

12. The arrangement as set forth in claim 10 or 11, **characterized in that** said appendage (21) rests by its thickened portion (24) on said hollow profile (12).

13. The arrangement as set forth in any of the claims 10 to 12, **characterized in that** a gap (31) is formed between said appendage (21) and said hollow profile (12) in the middle portion (25) of said appendage (21).

## Revendications

1. Protection anti-pincement pour un dispositif de fermeture (13) motorisé, en particulier pour un toit ouvrant d'un véhicule automobile, comportant un profilé creux (12) en matériau élastomère qui comprend au moins deux zones électriquement conductrices (27, 28) écartées l'une de l'autre, dont le contact déclenche une opération de commutation pour piloter l'unité d'entraînement (30) du dispositif de fermeture (13), **caractérisée en ce qu'**à l'une au moins de ses extrémités (14 ; 15) le profilé creux (12) est pourvu d'un talon (21) qui présente une épaisseur en section transversale inférieure à celle du profilé creux (12).

2. Protection anti-pincement selon la revendication 1, **caractérisée en ce que** le talon (21) va en se rétrécissant à partir de l'extrémité associée (14) du profilé creux (12).

3. Protection anti-pincement selon l'une ou l'autre des revendications 1 et 2, **caractérisée en ce que** la face supérieure (33) du talon (21) s'étend en affleurement avec la face supérieure (32) du profilé creux (12).

4. Protection anti-pincement selon l'une des revendications 1 à 3, **caractérisée en ce que** le talon (21) est relié à l'extrémité associée (14) du profilé creux (12) via un emplacement destiné à se plier (22) dont la résistance à la flexion est réduite.

5. Protection anti-pincement selon l'une des revendications 1 à 4, **caractérisée en ce que** le talon (21) est agencé sur une face frontale du profilé creux (12).

6. Protection anti-pincement selon l'une des revendications 1 à 5, **caractérisée en ce que** le talon (21) présente un épaississement (24) à son extrémité détournée du profilé creux (12).

7. Protection anti-pincement selon l'une des revendications 1 à 6, **caractérisée en ce que** le talon (21) est réalisé avec une section transversale sensiblement incurvée.

8. Protection anti-pincement selon l'une des revendications 1 à 7, **caractérisée en ce que** l'extrémité (14) du profilé creux (12) pourvue du talon (21) présente un épaississement (23).

9. Protection anti-pincement selon la revendication 8, **caractérisée en ce que** l'épaississement (23) présente une surface d'appui (34) adaptée à la face supérieure (32) du profilé creux (12).

10. Agencement d'une protection anti-pincement (1) selon l'une des revendications précédentes, **caractérisé en ce que** les extrémités (14, 15) du profilé creux (12) se chevauchent, et **en ce que** le talon (21) prévu à l'une des extrémités (14) repose sur le profilé creux (12) en étant écarté de l'autre extrémité (15).

11. Agencement selon la revendication 10, **caractérisé en ce que** l'épaississement (23) de l'extrémité (14) du profilé creux (12) pourvue du talon (21) repose par sa surface d'appui (27) sur le profilé creux (12) en étant écarté de l'autre extrémité (15).

12. Agencement selon l'une ou l'autre des revendications 10 et 11, **caractérisé en ce que** le talon (21) repose par son épaississement (24) sur le profilé creux (12).

13. Agencement selon l'une des revendications 10 à 12, **caractérisé en ce que** dans la zone centrale (25) du talon (21), un intervalle (31) est formé entre le talon (21) et le profilé creux (12).
